# EUROPÄISCHE PATENTSCHRIFT

(11) **EP 0 904 685 B1**
(45) Veröffentlichungstag und Bekanntmachung des Hinweises auf die Patenterteilung: **04.12.2002**
(21) Anmeldenummer: 98117521.9
(22) Anmeldetag: 15.09.1998
(51) Int. Cl.: A01F 15/14, D07B 1/02

(54) **Garn und Bindevorrichtung**
Twine and bindingapparatus
Ficelle et noueur

(30) Priorität: 26.09.1997 DE 19742488
(43) Veröffentlichungstag der Anmeldung: 31.03.1999
(73) Patentinhaber: DEERE & COMPANY, Moline, Illinois 61265-8098 (US)
(72) Erfinder: Boucher, Jean Francois, 70100 Gray (FR)
(74) Vertreter: Magin, Ludwig Bernhard

(56) Entgegenhaltungen:
- EP-A- 0 159 953
- EP-A- 0 535 532
- WO-A-93/13988
- DE-B- 1 269 590
- GB-A- 1 081 536
- US-A- 5 419 241

## Beschreibung

Die Erfindung betrifft Garn zum Binden von Preßerzeugnissen, insbesondere von Rundballen, eine Bindevorrichtung mit einer Garnführung zum Aufbringen von Garn auf ein Preßerzeugnis und ein Verfahren zum Sichern der Enden von Garn auf einem Preßerzeugnis.

Garn und Bindevorrichtungen werden in vielfältiger Weise benutzt, unter anderem, um einen Rundballen in einer Rundballenpresse zu binden. Die Besonderheit hierbei liegt darin, daß das Garn an seinen Enden nicht miteinander verknüpft wird, sondern solange auf den Rundballen aufgewickelt wird, bis es sich infolge seiner Eigenreibung hält. Bei der Handhabung des Rundballens tritt jedoch stets eine mechanische Beanspruchung auf, die dazu führt, daß das lose Ende des Garns von dem Rundballen abfällt.

Es ist bereits vorgeschlagen worden, die Garnenden in dem Preßerzeugnis zu verankern bzw. sie mit einem Klebeband zu sichern (DE-A1-41 32 664).

Ferner ist es aus der DE-B-1 239 979, der EP-A-0 012 684 und der DE-A-29 30 590 bereits bekannt, das Ende einer einen Rundballen umhüllenden Folie mit Klebstoff zu fixieren. Diese Technik ist aber einerseits angesichts des hohen Verbrauchs an Umhüllungsmaterial sehr nachteilig und andererseits bei flächigen Erzeugnissen zwar relativ einfach anzuwenden, aber nicht auf Garn übertragbar.

Das der Erfindung zugrunde liegende Problem wird darin gesehen, daß die Garnenden nur mit großem technischen Aufwand gesichert werden können.

Dieses Problem wird erfindungsgemäß durch die Lehre der Patentansprüche 1 und 4 bis 6, 8 und 10 gelöst, wobei in den weiteren Patentansprüchen Merkmale aufgeführt sind, die die Lösung in vorteilhafter Weise weiterentwickeln.

Ein solches Garn und insbesondere dessen Enden haften von selbst auf dem Preßerzeugnis, z. B. einem Rundballen aus Erntegut, so fest, daß es sich nicht von selbst löst, z. B. wenn der Rundballen gerollt wird. Andererseits kann das Garn aber von Hand ohne allzu große Kraftanstrengung von dem Preßerzeugnis abgezogen werden und zerreißt nicht dessen Oberfläche. Diese relativ geringe Haltekraft ist ausreichend, weil das Garn im wesentlichen aufgrund seiner Reibung auf dem Preßerzeugnis von sich aus haftet und lediglich vermieden werden muß, daß es sich von den Enden her wieder löst. Die geringe Haftung hat auch den Vorteil, daß das Garn auf einer Rolle vorrätig gehalten werden kann und sich für den Bindevorgang von dieser abziehen läßt.

Wenn das Garn mit dem Klebstoff trocken ist, solange es nicht auf das Preßerzeugnis aufgelegt wird, oder bis kurz davor, wird sowohl die Reibung auf dem Weg von der Garnrolle zu dem Preßerzeugnis als auch die Gefahr, daß Schmutz anhaften kann beseitigt. Klebstoff kann in vielfältiger Weise gebunden werden und erst durch Einwirkung äußerer Einflüsse gelöst werden. Z. B. kann der Klebstoff durch kurzzeitige Hitzeeinwirkung in einer Glühspirale oder mittels eines Heißluftföns gelöst werden. Nach einer anderen Art ist der Klebstoff in Tropfen oder in einem Film gebunden, die sich bei Reibung oder unter Druck öffnen und klebrig werden. Kleber, die erst durch Einwirkung von Feuchtigkeit klebrig werden, können dadurch aktiviert werden, daß mit einer Sprühdüse z. B. Wasser aufgesprüht wird, was z. B. erst kurz vor dem Auflegen auf das Preßerzeugnis erfolgen kann. Insbesondere bei Erntegut wäre Wasser vorteilhaft, weil es gesundheitlich unbedenklich ist, leicht handhabbar ist, kostengünstig ist und sich leicht verflüchtigt. Eine andere Art, Klebstofftropfen oder dergleichen zu öffnen, liegt in der Beaufschlagung mit hohen Frequenzen, z. B. Ultraschall oder Mikrowelle. Ein entsprechendes Gerät kann z. B. als Spule ausgebildet werden, durch die das Garn insbesondere berührungslos geführt wird. Als weitere Katalysatoren kommen sonstige chemische Stoffe in Betracht, die z. B. eine zweite Komponente enthalten und mit einer ersten Komponente auf dem Garn beim Zusammentreffen einen Klebstoff bilden.

Durch die Verwendung von Hitze oder Wellen erzeugenden Spulen, Sprühvorrichtungen oder Druckvorrichtungen, die jeweils das Garn in sich führen, d. h. es ganz oder teilweise umgeben, bzw. an es anlegbar sind, kann der entsprechende Klebstoff gelöst werden.

Mittels einer Sprühvorrichtung kann nicht nur ein Medium auf das Garn aufgesprüht werden, das einen bereits vorhandenen Klebstoff mit Wasser oder einer anderen Flüssigkeit erst aktiviert. Sondern, mit der Sprühvorrichtung kann statt dessen auch ein schnell trocknender Kleber auf das Garn aufgesprüht werden, so daß es der Verwendung eines speziellen Garns nicht bedarf.

Eine Haftwirkung des Garns auf sich bzw. dem Preßerzeugnis kann auch ohne zusätzlichen Kleber dadurch erreicht werden, daß die jeweiligen Fasern des Garns gekräuselt werden und dadurch Schlaufen und Widerhaken bilden, die sich in dem Preßgut und/oder dem übrigen Garn verfangen und somit das Garn halten.

Eine entsprechende Kräuselvorrichtung kann mit einem Rotor oder einem sich gegen die Bewegungsrichtung des Garns bewegenden Band versehen sein, die das Garn aufrauht.

Nachfolgend sind einige Ausführungsbeispiele der Erfindung näher beschrieben.

Eine herkömmliche bekannte Presse ist mit einem Vorratskasten für Garn, Leitmitteln und einer beweglichen Garnführung versehen.

Bei der Presse kann es sich sowohl um eine herkömmliche, landwirtschaftliche Rundballenpresse als auch um eine industriell eingesetzte Presse handeln, bei der ein Preßerzeugnis von Garn lediglich umschlungen wird, dessen Enden nicht miteinander verknotet werden. Im Innern der Presse ist ein Preßraum vorgesehen, in den durch eine Eintrittsöffnung zu pressendes Gut eingespeist und in dem es zu einem Preßerzeugnis gepreßt wird. Der Vorratskasten kann eine oder mehrere Garnrollen enthalten, auf denen Garn beträchtlicher Länge aufgewickelt ist. Der Vorratskasten befindet sich an einem Gehäuse der Presse, z. B. einer Rundballenpresse, und weist wenigstens eine Öffnung auf, durch die das Garn entnommen werden kann.

Die Leitmittel setzen sich aus Ösen, Rohren, Kanälen oder dergleichen Elemente zusammen, durch die das Garn von dem Vorratsbehälter zu dem Preßerzeugnis geführt wird.

Die Garnführung besteht in der Regel aus einem beweglichen Rohr, das an dem Preßerzeugnis entlang geführt wird und das Garn z. B. spiralförmig um das Preßerzeugnis windet, das zu diesem Zweck in dem Preßraum gedreht wird. Ein dem Preßraum zugelegener Endbereich der Garnführung reicht so nahe an diesen heran bzw. wird an diesen herangeführt, daß das zu Beginn des Bindevorgangs lose herabhängende Ende des Garns von dem Preßerzeugnis erfaßt wird. Im Bewegungsbereich der Garnführung ist eine Schneidvorrichtung vorgesehen, die das Garn am Ende des Bindevorgangs durchtrennt und hierzu herkömmlich mechanisch gesteuert wird.

Der Bindevorgang geht dermaßen vonstatten, daß die Garnführung mit einem lose herabhängenden Garnende in den Bereich des Preßerzeugnisses gebracht und das Garnende von diesem erfaßt wird. Während das Preßerzeugnis das Garn mitnimmt, wird es von der Garnrolle durch die Leitmittel abgezogen. Während des Bindevorgangs bewegt sich die Garnführung an dem Preßerzeugnis entlang und gelangt schließlich zur Schneidvorrichtung, wo das Garn durchtrennt wird. Anschließend nimmt die Garnführung wieder eine Ruhestellung ein.

Das Garn kann sowohl Naturgarn aus Sisal wie auch Kunststoffgarn sein, und weist eine hohe Festigkeit auf. Das Garn ist zwar einige Millimeter dick, setzt sich aber aus einer Vielzahl von einzelnen sehr dünnen Fasern zusammen, die miteinander verdrillt werden.

Nach einem ersten Ausführungsbeispiel ist das Garn mit einem Klebstoff versehen, der durch Beaufschlagung mit Hitze, Feuchtigkeit, Schwingungen oder beim Zusammentreffen mit einer zweiten Komponente eines Klebstoffs klebrig wird und sehr schnell abtrocknet. Die Trocknungsdauer sollte so kurz bemessen sein, daß die Haftwirkung bereits eingetreten ist, wenn das Preßerzeugnis, z. B. der Rundballen, den Preßraum verläßt.

Das Aufsprühen von Feuchtigkeit, z. B. Wasser oder einer sonstigen Flüssigkeit, insbesondere Kleber, kann mittels einer Sprühvorrichtung erfolgen, die die Flüssigkeit einem Vorratsbehälter entnimmt und durch eine Düse abgibt, die sich z. B. am Auslaßende der Garnführung befindet. Die Düse kann so gesteuert werden, daß sie Flüssigkeit erst am Ende des Bindevorgangs und während einer bestimmten Dauer abgibt und zwar zielgerichtet auf das Garn. Die Steuerung kann z. B. von der Stellung der Garnführung abgeleitet werden. Sollte die Düse an einer anderen Stelle vorgesehen werden, z. B. starr im Bereich der Schneidvorrichtung, ist diese so rechtzeitig zu aktivieren und so zu plazieren, daß eine ausreichende Länge des Garns mit Klebstoff versehen bzw. bereits vorhandener Klebstoff aktiviert wird. Die Düse kann als eine Ringdüse ausgebildet sein, durch deren Innenraum das Garn insbesondere berührungslos geführt wird.

Ein Art von Kleber kann solcher sein, wie er z. B. in Haarsprays verwendet wird. Als Kleber kann z. B. solcher der Bezeichnung 7043 von 3M oder Scotch-Grip 7202 ebenfalls von 3M verwendet werden.

In analoger Weise kann eine Erhitzungsspule, eine Heißluftdüse, ein Ultraschallwellenerzeuger oder dergleichen Vorrichtung angeordnet und gesteuert werden.

Nach einem anderen Ausführungsbeispiel der Erfindung ist das Garn bereits auf der Garnrolle mit einem begrenzt haftenden Klebstoff besprüht oder getränkt, dessen Haftung so eingestellt ist, daß das Garn von den darunterliegenden Windungen abgezogen werden kann und beim Auflegen auf das Preßerzeugnis erneut haftet, was mit einem Kontaktklebstoff erreichbar ist. Solche Kontaktklebstoffe sind z. B. von der kurzzeitigen Verbindetechnik von Papier und Klebebändern bekannt.

Nach wieder einem anderen Ausführungsbeispiel ist der Klebstoff in feinen Kapseln oder in einem Film in oder auf dem Garn gebunden und solange wirkungslos, als diese Behältnisse nicht geöffnet werden. Es ist eine mechanisch wirkende Druckvorrichtung, z. B. eine Reibplatte oder Druckrollen vorgesehen, die auf das vorbeigleitende Garn einwirkt/einwirken und so die Kapseln oder den Film aufreißen oder sprengen, so daß der Klebstoff austritt und die Haftwirkung entfaltet. Auch diese Reibplatte bzw. die Druckrollen sind vorzugsweise am Auslaß der Garnführung vorgesehen. Derartige Klebstoffe werden bereits zur Sicherung von Gewinden, insbesondere bei Schrauben, benutzt.

Nach einer anderen Variante könnte ein Behälter mit Klebstoff vorgesehen werden, dessen Innenraum durch Dichtlippen an einem Ein- und einem Ausgang verschlossen werden, wobei das Garn zwischen den Dichtlippen hindurchgezogen werden kann, während es infolge der Passage durch den Innenraum von Klebstoff benetzt wird. Ein weiterer Vorteil dieser Lösung liegt darin, daß überflüssiger Klebstoff von den Dichtlippen vor dem Austreten des Garns abgestreift wird.

Nach einer weiteren Variante wird zur Festlegung des Garns kein Klebstoff verwendet, sondern das Garn bzw. dessen Fasern wird aufgekräuselt und bildet dadurch Schlaufen und Haken, die sich in dem Preßgut oder benachbarten Schlaufen und Haken verfangen und somit das Garn halten. Hierzu kann an irgendeiner Stelle des Garnverlaufs, vorteilhafterweise aber am Ende der Garnführung ein Rad oder ein Band mit einer aggressiven angetriebenen Bearbeitungsfläche vorgesehen werden, die sich entgegen der Bewegungsrichtung des Garns bewegen und somit die einzelnen Fasern herauslösen oder aufreißen.

In all diesen Fällen wird an dem Garn mittels Klebstoff oder den Fasern des Garns eine Haltekraft erzeugt, die verhindert, daß sich zumindest die Garnenden von dem Preßerzeugnis lösen. Wenn der Klebstoff auf der gesamten Garnlänge wirksam wird oder das Garn auf seiner gesamten Länge aufgerauht wird, ist die Haltekraft um so größer.

Je nach der gewählten Variante kommen auch verschiedene Verfahren zur Anwendung.

Nach einem ersten Verfahren wird zunächst das Garn mit einem Klebstoff oder wenigstens einer Komponente davon offen oder in sich geschlossen versehen, z. B. durch Eintauchen in ein Bad, und anschließend zu einer Vorratsrolle aufgerollt. In einem gegebenenfalls erforderlichen zweiten Verfahrensschritt wird das Garn in eine Bindevorrichtung einer Presse eingeführt und mit einer zweiten Komponente eines Klebstoffs versehen, dessen Klebestoff durch elektrische, mechanische oder chemische Mittel aktiviert und anschließend in dem Preßraum der Presse um das Preßerzeugnis gelegt.

Nach einem anderen Verfahren wird herkömmliches Garn in die Bindevorrichtung eingeführt und in deren Garnführung oder an einer Stelle zwischen dieser und dem Preßraum mit einem Klebstoff versehen.

Ein drittes Verfahren sieht vor, daß herkömmliches Garn in eine Bindevorrichtung eingeführt und von einer Kräuselvorrichtung beaufschlagt wird, in der die einzelnen Fasern wenigstens auf einem Teil der Garnlänge gekräuselt oder in anderer Weise bearbeitet werden, um Schlaufen und Haken zu bilden.

## Patentansprüche

1. Garn zum Binden eines Preßerzeugnisses, insbesondere eines Rundballens, **gekennzeichnet durch** Klebstoff in oder auf seinen Fasern mit einer Haltekraft, die eine Haftung auf dem Garn selbst oder dem Preßerzeugnis erzeugt, aber keine stoffliche Verbindung mit diesem eingeht.

2. Garn nach Anspruch 1, **dadurch gekennzeichnet, daß** der Klebstoff in trockenem Zustand in bzw. auf dem Garn vorgesehen ist und durch Hitzeeinwirkung, mechanische Beanspruchung, Befeuchtung, Ultraschall oder dergleichen Katalysatoren in einen klebrigen Zustand versetzt wird.

3. Garn nach Anspruch 1 oder 2, **dadurch gekennzeichnet, daß** es mit einer Komponente eines Zweikomponentenklebers versehen ist.

4. Bindevorrichtung mit einer Garnführung zum Aufbringen von Garn auf ein Preßerzeugnis mit einem Garn nach einem der Ansprüche 1 bis 3, **gekennzeichnet durch** eine Spule zum Erzeugen von Hitze oder Hochfrequenzwellen, **durch** die das Garn geführt wird.

5. Bindevorrichtung mit einer Garnführung zum Aufbringen von Garn auf ein Preßerzeugnis mit einem Garn nach einem der Ansprüche 1 bis 3, **gekennzeichnet durch** eine Sprühvorrichtung, die auf die Bahn des Garns gerichtet ist.

6. Bindevorrichtung mit einer Garnführung zum Aufbringen von Garn auf ein Preßerzeugnis mit einem Garn nach einem der Ansprüche 1 bis 3, **gekennzeichnet durch** eine mechanische Druckvorrichtung, die an das Garn anlegbar ist.

7. Bindevorrichtung nach einem oder mehreren der vorherigen Ansprüche 4 bis 6 **gekennzeichnet durch** einen Klebstoff aufnehmenden Behälter mit einer Ein- und einer Auslaßöffnung, die mit nachgiebigen Dichtlippen verschlossen und einen Durchtritt des Garns gestatten.

8. Bindevorrichtung mit einer Garnführung zum Aufbringen von Garn auf ein Preßerzeugnis, **gekennzeichnet durch** eine Vorrichtung zum Kräuseln der einzelnen Fasern des Garns vor der Anlage des Garns auf dem Preßerzeugnis.

9. Bindevorrichtung nach Anspruch 8, **dadurch gekennzeichnet, daß** die Vorrichtung einen angetriebenen Rotor mit einer rauhen Oberfläche aufweist, über die die Fasern des Garns bewegt werden.

10. Verfahren zum Sichern der Enden von Garn auf einem Preßerzeugnis, **dadurch gekennzeichnet, daß** wenigstens Endbereiche des Garns mittels eines Klebers oder durch Kräuseln seiner Fasern selbsthaftend ausgebildet werden, bevor das Garn auf das Preßerzeugnis aufgebracht wird.

## Claims

1. Twine for binding a press product, especially a round bale, **characterized by** adhesive in or on its fibres with a holding force which effects adhesion to the twine itself or to the press product, but does not enter into any material combination with this.

2. Twine according to claim 1, **characterized in that** the adhesive is provided in or on the twine in dry state and is transformed into an adhesive state by the action of heat, mechanical stress, wetting, ultrasound or the like catalysts.

3. Twine according to claim 1 or 2, **characterized in that** it is provided with one component of a two-component adhesive.

4. Binding apparatus with a twine guide for applying twine to a press product with a twine according to any of claims 1 to 3, **characterized by** a coil for generating heat or high frequency waves, through which the twine is fed.

5. Binding apparatus with a twine guide for applying twine to a press product with a twine according to any of claims 1 to 3, **characterized by** a spraying device which is directed on to the path of the twine.

6. Binding apparatus with a twine guide for applying twine to a press product with a twine according to any of claims 1 to 3, **characterized by** a mechanical pressure device which can be applied to the twine.

7. Binding apparatus according to one or more of the preceding claims 4 to 6, **characterized by** a container receiving adhesive, with inlet and outlet openings which are closed by yielding sealing lips and allow passage of the twine.

8. Binding apparatus with a twine guide for applying twine to a press product, **characterized by** a device for crimping the individual fibres of the twine before the application of the twine to the press product.

9. Binding apparatus according to claim 8, **characterized in that** the device comprises a driven rotor with a rough surface, over which the fibres of the twine are moved.

10. A method of securing the ends of twine on a press product, **characterized in that** at least end regions of the twine are rendered self-adherent by means of an adhesive or by crimping its fibres, before the twine is applied to the press product.

## Revendications

1. Ficelle destinée à lier un produit pressé, en particulier une balle ronde, **caractérisée par** une matière adhésive dans ou sur ses fibres avec une force de retenue qui produit une adhérence contre la ficelle elle-même ou contre le produit pressé, mais qui ne provoque aucune liaison de matière avec celui-ci.

2. Ficelle selon la revendication 1, **caractérisée en ce que** la matière adhésive est prévue à l'état sec dans ou sur la ficelle et est transposée à l'état adhésif sous l'effet de la chaleur, d'une sollicitation mécanique, d'une humidification, d'ultrasons ou de catalyseurs analogues.

3. Ficelle selon la revendication 1 ou 2, **caractérisée en ce qu'**elle comporte un composant d'une colle à deux composants.

4. Lieuse comprenant un guidage de ficelle, destinée à poser une ficelle sur un produit pressé et munie d'une ficelle selon l'une des revendications 1 à 3, **caractérisée par** une bobine destinée à générer de la chaleur ou des ondes à haute fréquence et à travers laquelle est guidée la ficelle.

5. Lieuse comprenant un guidage de ficelle, destinée à poser une ficelle sur un produit pressé et munie d'une ficelle selon l'une des revendications 1 à 3, **caractérisée par** un dispositif de pulvérisation qui est dirigé vers la trajectoire de la ficelle.

6. Lieuse comprenant un guidage de ficelle, destinée à poser une ficelle sur un produit pressé et munie d'une ficelle selon l'une des revendications 1 à 3, **caractérisée par** un dispositif de pression mécanique, qui peut être mis en appui contre la ficelle.

7. Lieuse selon une ou plusieurs des revendications précédentes 4 à 6, **caractérisée par** un boîtier contenant la matière adhésive et muni d'un orifice d'entrée et d'un orifice de sortie, qui sont fermés par des lèvres d'étanchéité flexibles et qui permettent le passage de la ficelle.

8. Lieuse comprenant un guidage de ficelle, destinée à poser une ficelle sur un produit pressé, **caractérisée par** un dispositif destiné à froncer les différentes fibres de la ficelle avant que la ficelle soit appliquée contre le produit pressé.

9. Lieuse selon la revendication 8, **caractérisée en ce que** ladite lieuse comprend un rotor actionné, muni d'une surface rugueuse, sur laquelle passent les fibres de la ficelle.

10. Procédé destiné à bloquer les extrémités de la ficelle sur un produit pressé, **caractérisé en ce qu'**au moins les extrémités de la ficelle sont conçues de manière auto-adhésives au moyen d'une matière adhésive ou par le fronçage de ses fibres, avant que la ficelle soit appliquée sur le produit pressé.
